# EUROPÄISCHE PATENTSCHRIFT

(11) **EP 1 245 346 B1**
(45) Veröffentlichungstag und Bekanntmachung des Hinweises auf die Patenterteilung: **26.04.2006**
(21) Anmeldenummer: 02005589.3
(22) Anmeldetag: 12.03.2002
(51) Int. Cl.: B25J 15/02

(54) **Fluidbetätigter Parallelgreifer mit zwei Antriebseinheiten**
Fluid actuated parallel grippper with two actuating units
Pince de préhension à machoires parallèles actionnées par deux vérins

(30) Priorität: 28.03.2001 DE 20105448 U
(43) Veröffentlichungstag der Anmeldung: 02.10.2002
(73) Patentinhaber: FESTO AG & Co, 73734 Esslingen (DE)
(72) Erfinder: Bellandi, Giuseppe, 25030 Roncadelle (BS) (IT); Maffeis, Giuseppe, 25030 Roncadelle (BS) (IT)
(74) Vertreter: Abel, Martin

(56) Entgegenhaltungen:
- DE-A- 3 524 578
- DE-A- 10 025 467
- DE-A- 19 513 739
- PATENT ABSTRACTS OF JAPAN vol. 2000, no. 13, 5. Februar 2001 (2001-02-05) -& JP 2000 271892 A (SMC CORP), 3. Oktober 2000 (2000-10-03)

## Beschreibung

Die Erfindung betrifft einen fluidbetätigten Parallelgreifer, mit zwei nebeneinander angeordneten Greifbackenträgern, die unter gegenseitiger Annäherung oder Entfernung unter Ausübung von Arbeitsbewegungen zwischen einer Offenstellung und einer Schließstellung relativ zueinander linear beweglich sind, und mit zwei nebeneinander angeordneten Antriebseinheiten, die durch Fluidbeaufschlagung zu zueinander parallelen und zu den Arbeitsbewegungen rechtwinkeligen Antriebsbewegungen veranlasst werden können, wobei die Antriebseinheiten und die Greifbackenträger zum Hervorrufen der Arbeitsbewegungen durch jeweils einen zwischengeschalteten Schwenkhebel paarweise bewegungsgekoppelt sind.

Ein derartiger Parallelgreifer geht aus dem Patent Abstracts of Japan, Bd. 2000, Nr. 13 - 5. Februar 2001 - & JP 2000 271892 A (SMC Corp) - 3. Oktober 2000, hervor. Dort sind zwei Antriebseinheiten nebeneinander angeordnet, die jeweils unter Zwischenschaltung eines Schwenkhebels mit einem von zwei Greifbackenträgern bewegungsgekoppelt sind. Jede Antriebseinheit ist für die Bewegung eines Greifbackenträgers zuständig. Durch aufeinander abgestimmte Ansteuerung der Antriebseinheiten können die Greifbackenträger zu Arbeitsbewegungen angetrieben werden, bei denen sie sich einander annähern oder voneinander entfernen. Auf Grund unterschiedlich dimensionierter Antriebseinheiten kann der eine Greifbackenträger schneller bewegt werden als der andere. Sollen synchrone Bewegungen der Greifbackenträger erzeugt werden dürfte dies mit einem erhöhten steuerungstechnischen Aufwand verbunden sein.

Im "Pneumatic-Katalog 97/98", Seite 2.3/10-1, der Anmelderin wird ein Parallelgreifer beschrieben, der über zwei relativ zueinander bewegliche Greifbackenträger sowie zwei für den Antrieb der Greifbackenträger zuständige Antriebseinheiten verfügt. Jede Antriebseinheit ist mit einem Kolben ausgestattet, der durch ein Betätigungsfluid beaufschlagbar ist, um die gewünschte Antriebsbewegung hervorzurufen. Die Antriebseinheiten werden im Gegentakt aktiviert und arbeiten abwechselnd mit an den Greifbackenträgern vorgesehenen Kulissen zusammen, um synchrone gegensinnige Arbeitsbewegungen der Greifbackenträger hervorzurufen. Bei diesem Parallelgreifer können die Schließ-Arbeitsbewegungen und Öffnungs-Arbeitsbewegungen der Greifbackenträger auf Grund der speziellen Kulissengestaltung stets nur durch Betätigung einer einzigen Antriebseinheit hervorgerufen werden. Es kann daher Anwendungsfälle geben, bei denen die erzeugbare Schließkraft nicht ausreichend ist. Wegen der einzuhaltenden Toleranzen ist zudem die Herstellung der Kulissenmechanik sehr aufwendig.

Es ist die Aufgabe der vorliegenden Erfindung, einen Parallelgreifer der eingangs genannten Art zu schaffen, der bei synchronem Bewegungsverhalten die Realisierung hoher Betätigungskräfte gestattet.

Zur Lösung dieser Aufgabe ist vorgesehen, dass die Schwenkhebel in ihren Schwenkbewegungen durch gegenseitige mechanische Kopplung synchronisiert sind.

Auf diese Weise besteht die Möglichkeit, die gegensinnigen Arbeitsbewegungen der Greifbackenträger durch gleichzeitige Betätigung beider Antriebseinheiten hervorzurufen und auf diese Weise höhere Arbeitskräfte zu realisieren. Jede Antriebseinheit arbeitet hauptsächlich nur mit einem Greifbackenträger zusammen, so dass eine gezielte Kraftübertragung möglich ist, wobei durch die mechanische Kopplung der Schwenkhebel ein synchrones Bewegungsverhalten der Greifbackenträger mit stets mittenzentrierter Position gewährleistet wird. Der Aufbau des Parallelgreifers ist verhältnismäßig einfach und wenig verschleißanfällig.

Zwar existieren bereits sogenannte Drei-Punkt-Greifer - vgl. "Pneumatic-Katalog 97/98", Seite 2.3/40-1, der Anmelderin -, bei denen zur Bewegungskopplung zwischen Antriebseinheit und Greifbackenträger bereits Schwenkhebel eingesetzt werden. Allerdings ist hier nur eine einzige Antriebseinheit vorgesehen, und eine mechanische Kopplung mehrerer Schwenkhebel zur Synchronisation der Bewegungen ist nicht realisiert.

Vorteilhafte Weiterbildungen der Erfindung gehen aus den Unteransprüchen hervor.

Ein besonders kompakter Aufbau stellt sich ein, wenn die Schwenkhebel im wesentlichen zwischen den beiden Antriebseinheiten platziert sind und/oder wenn die Schwenkhebel mit Bezug zur Richtung der Arbeitsbewegungen auf gleicher Höhe und mit zueinander parallelen Schwenkebenen seitlich nebeneinander angeordnet sind.

Vorzugsweise ist jeder Antriebseinheit in Richtung der Antriebsbewegung ein Greifbackenträger vorgelagert, wobei jede Antriebseinheit durch den ihr zugeordneten Schwenkhebel mit dem der jeweils anderen Antriebseinheit vorgelagerten Greifbackenträger bewegungsgekoppelt ist. Auf diese Weise liegt quasi ein sich überkreuzender Kraftfluss vor, was sich optimal erwiesen hat, um sämtliche funktionsrelevanten Komponenten auf engstem Raume unterzubringen.

Eine gegenseitige Behinderung der Schwenkhebel im Bereich ihrer Schwenklagerung kann vorteilhaft dadurch ausgeschlossen werden, dass jeder Schwenkhebel über ein bogenförmiges Langloch verfügt, das von einem der Schwenklagerung des anderen Schwenkhebels dienenden Lagerbolzen durchsetzt werden kann. Man kann auf diese Weise eine einfache Schwenklagerung durch geeignete Lagerbolzen realisieren, ohne die Schwenkbeweglichkeit zu beeinträchtigen.

Die gewünschte Synchronisation der Bewegungen lässt sich insbesondere dadurch realisieren, dass an wenigstens einem Schwenkhebel ein zur Schwenkachse beabstandeter Mitnehmer vorgesehen ist, der mit einem am anderen Schwenkhebel vorgesehenen Mitnehmer-Gegenstück in Mitnahmeeingriff steht. Der Mitnahmeeingriff ist zweckmäßigerweise so ausgebildet, dass Mitnehmer und Mitnehmer-Gegenstück quer zur Schwenkrichtung der beiden Schwenkhebel relativ zueinander spielbehaftet sind, um Verklemmungen auszuschließen.

Es ist empfehlenswert, die Bewegungskopplung durch die Schwenkhebel derart auszuführen, dass die Arbeitsbewegungen der Greifbackenträger durch gleichzeitige und gleichsinnige Antriebsbewegungen der Antriebseinheiten hervorrufbar sind. Dadurch wird insbesondere auch die zur Zufuhr des Betätigungsfluides erforderliche Kanalführung innerhalb des Greifergehäuses stark vereinfacht.

Der einfache Aufbau des Parallelgreifers kann auch dadurch begünstigt werden, dass das Greifergehäuse ein zur Verschiebelagerung der beiden Antriebseinheiten dienendes Antriebsteil und ein bezüglich des Antriebsteils separat ausgebildetes, zur Lagerung der Greifbackenträger und der Schwenkhebel dienendes Kopfteil aufweist, wobei letzteres stirnseitig an das Antriebsteil angesetzt ist.

Besonders zweckmäßig ist auch ein Aufbau des Parallelgreifers, bei dem die Längsachsen der beiden Antriebseinheiten in einer gemeinsamen Ebene liegen, die parallel zu den Schwenkebenen der Schwenkhebel verläuft.

Nachfolgend wird die Erfindung anhand der beiliegenden Zeichnung näher erläutert. In dieser zeigen:

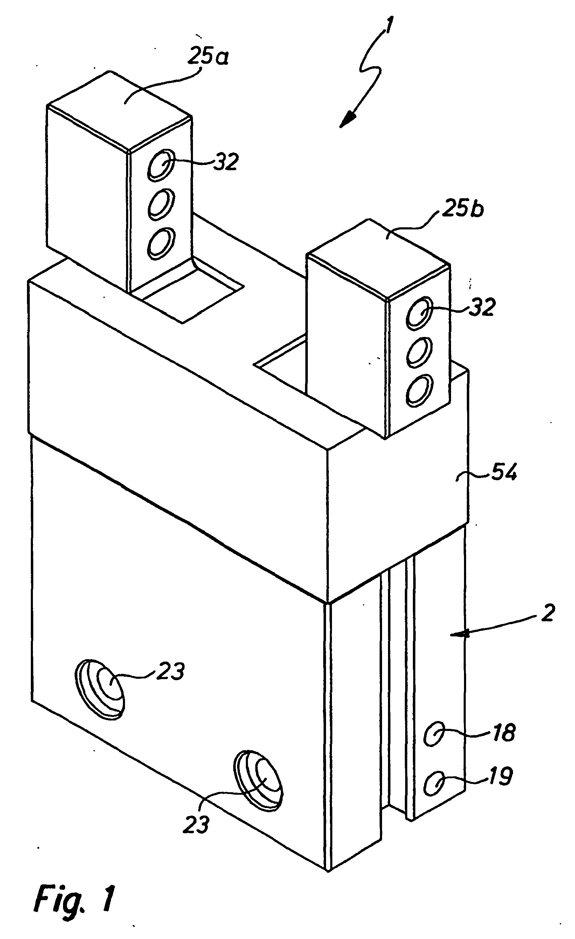

- Fig. 1: eine perspektivische Darstellung einer bevorzugten Bauform des erfindungsgemäßen Parallelgreifers,

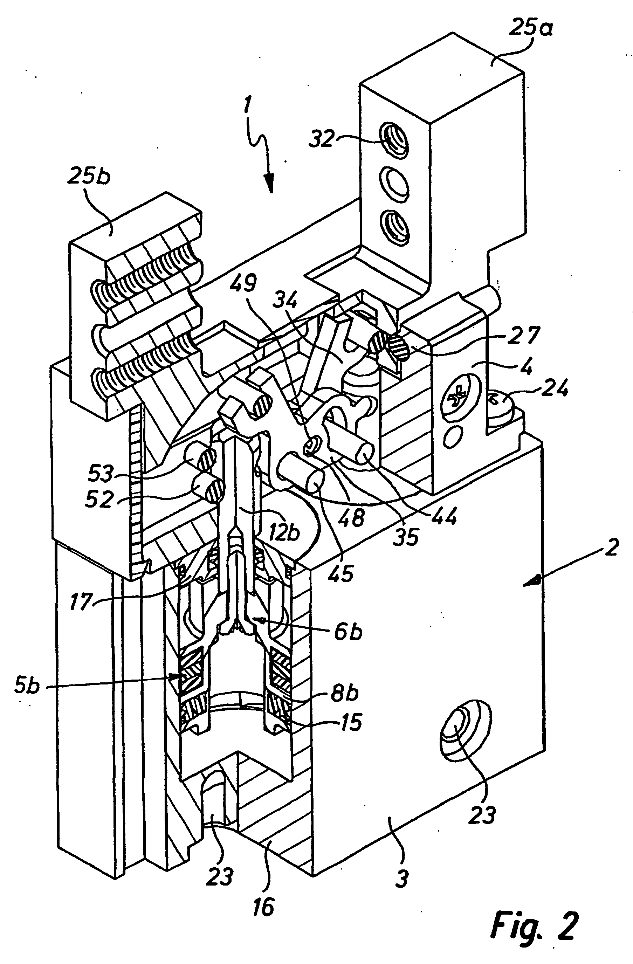

- Fig. 2: den Parallelgreifer aus Fig. 1 aus einem anderen Blickwinkel und teilweise aufgebrochen,

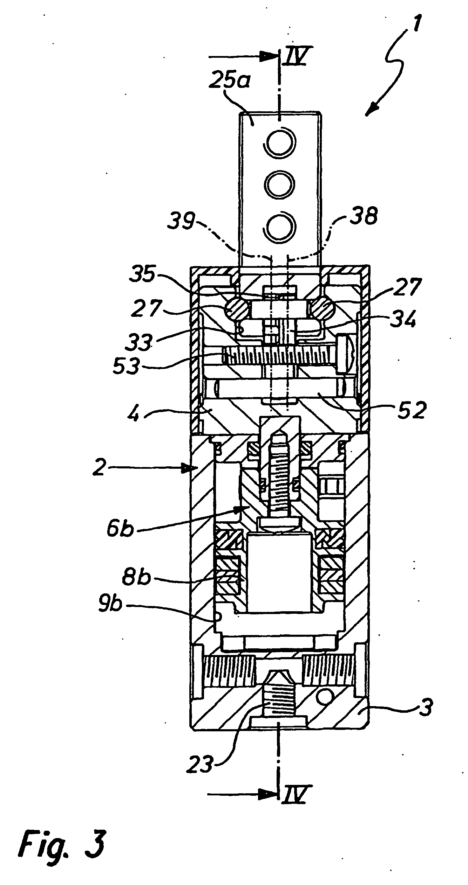

- Fig. 3: den Parallelgreifer in einem Längsschnitt gemäß Schnittlinie III-III aus Fig. 4 und
- Fig. 4: den Parallelgreifer in einem Längsschnitt gemäß Schnittlinie IV-IV aus Fig. 3, wobei die Blickrichtung verglichen mit der Schnittdarstellung der Fig. 2 entgegengesetzt ist.

Der in seiner Gesamtheit mit Bezugsziffer 1 bezeichnete Parallelgreifer verfügt über ein mehrteiliges Greifergehäuse 2, das sich im wesentlichen aus einem Antriebsteil 3 und einem an dessen vordere Stirnseite angesetzten Kopfteil 4 zusammensetzt.

Das Antriebsteil 3 ist mit zwei parallel nebeneinanderliegenden Betätigungseinrichtungen 5a, 5b ausgestattet, die eine Aktivierung des Parallelgreifers 1 durch ein Betätigungsfluid, insbesondere durch Druckluft, ermöglichen.

Jede Betätigungseinrichtung 5a, 5b verfügt über eine längliche Antriebseinheit 6a bzw. 6b, die relativ zum Antriebsteil 3 des Greifergehäuses 2 linear bewegbar ist. Die in der Zeichnung durch Doppelpfeile verdeutlichten Bewegungen seien nachfolgend als Antriebsbewegungen 7 bezeichnet.

Die beiden Antriebseinheiten 6a, 6b liegen längsseits nebeneinander und sind so ausgerichtet, dass ihre Antriebsbewegungen 7 parallel zueinander verlaufen.

Jede Antriebseinheit 6a, 6b verfügt über einen Kolben 8a bzw. 8b, der in einem Kolbenraum 9a bzw. 9b verschiebbar gelagert ist. Jeder Kolben 8a, 8b steht in fester Verbindung mit einer Antriebsstange 12a bzw. 12b, die beim Ausführungsbeispiel mit dem zugeordneten Kolben 8a, 8b verschraubt ist und die an der dem Kopfteil 4 zugewandten vorderen Stirnseite des Antriebsteils 3 herausragt.

Jeder Kolben 8a, 8b unterteilt den ihn aufnehmenden Kolbenraum 9a, 9b in einen auf der Seite der Antriebsstange 12a, 12b liegenden vorderen Beaufschlagungsraum 13a bzw. 13b und einen entgegengesetzt liegenden rückwärtigen Beaufschlagungsraum 14a bzw. 14b. Die Beaufschlagungsräume 13a, 14a bzw. 13b, 14b einer jeweiligen Betätigungseinrichtung 5a, 5b sind auf Grund einer vom Kolben 8a, 8b getragenen Dichtungsanordnung 15, die mit der Innenfläche des jeweiligen Kolbenraumes 9a, 9b dichtend zusammenarbeitet, gegeneinander abgedichtet.

Die Kolbenräume 9a, 9b sind stirnseitig durch Abschlusswände verschlossen. Die rückseitigen Abschlusswände 16 sind zweckmäßigerweise einstückiger Bestandteil des Antriebsteils 3 des Greifergehäuses 2. Die vorderen Abschlusswände 17a, 17b sind beim Ausführungsbeispiel von Deckeln gebildet, die unter Abdichtung in die zur vorderen Stirnseite des Antriebsteils 3 hin offenen Kolbenräume 9a, 9b eingesetzt sind und von den Antriebsstangen 12a, 12b unter Abdichtung durchsetzt werden.

Durch gleichzeitige Fluidbeaufschlagung der rückwärtigen Beaufschlagungsräume 14a, 14b können die Antriebseinheiten 6a, 6b zu einer Ausfahr-Antriebsbewegung veranlasst werden. Das hierzu erforderliche Betätigungsfluid kann vorteilhafterweise über einen einzigen Fluidanschluss 18 an der Außenseite des Antriebsteils 3 eingespeist werden, der gleichzeitig mit beiden rückwärtigen Beaufschlagungsräumen 14a, 14b kommuniziert. In vergleichbarer Weise ist den vorderen Beaufschlagungsräumen 13a, 13b ein einziger weiterer Fluidanschluss 19 zugeordnet, der ebenfalls an der Außenseite des Antriebsteils 3 platziert ist und über den Betätigungsfluid eingespeist werden kann, um die Antriebseinheiten 6a, 6b zu einer Einfahr-Antriebsbewegung 7 anzutreiben.

Die gemeinsame Fluidversorgung der für gleichgerichtete Bewegungen zuständigen Paare von Beaufschlagungsräumen 13a, 13b bzw. 14a, 14b erfolgt beim Ausführungsbeispiel dadurch, dass jeder Fluidanschluss 18, 19 mit einem Beaufschlagungsraum des zuvor genannten Paares von Beaufschlagungsräumen in Verbindung steht und zwischen den Beaufschlagungsräumen eines solchen Paares eine Verbindungsöffnung 22 vorliegt, die einen Fluidübertritt gestattet.

Insbesondere im rückwärtigen Bereich des Antriebsteils 3 sind zweckmäßigerweise Befestigungsbohrungen 23 oder sonstige Befestigungsmittel vorgesehen, die zur Befestigung des Parallelgreifers 2 an einer Tragstruktur verwendbar sind.

Das bezüglich des Antriebsteils 3 separat ausgebildete Kopfteil 4 ist an die vordere Stirnseite des Antriebsteils 3 angesetzt und mittels Schrauben 24 oder sonstiger geeigneter Befestigungsmittel fest fixiert. Das Greifergehäuse 2 bildet auf diese Weise eine starre Einheit. Ein Vorteil der getrennten Ausbildung besteht darin, dass eine separate Fertigung möglich ist.

Am Kopfteil 4 des Greifergehäuses 2 sind zwei Greifbackenträger 25a, 25b verstellbar gelagert. Mit Bezug zur Richtung der Antriebsbewegungen 7 und der zu diesen parallelen Längsachse 26 des Parallelgreifers 1 sind die Greifbackenträger 25a, 25b auf gleicher axialer Höhe platziert, wobei sie sich auf entgegengesetzten Seiten der Längsachse 26 befinden und einander rechtwinkelig zu dieser Längsachse 26 gegenüberliegen.

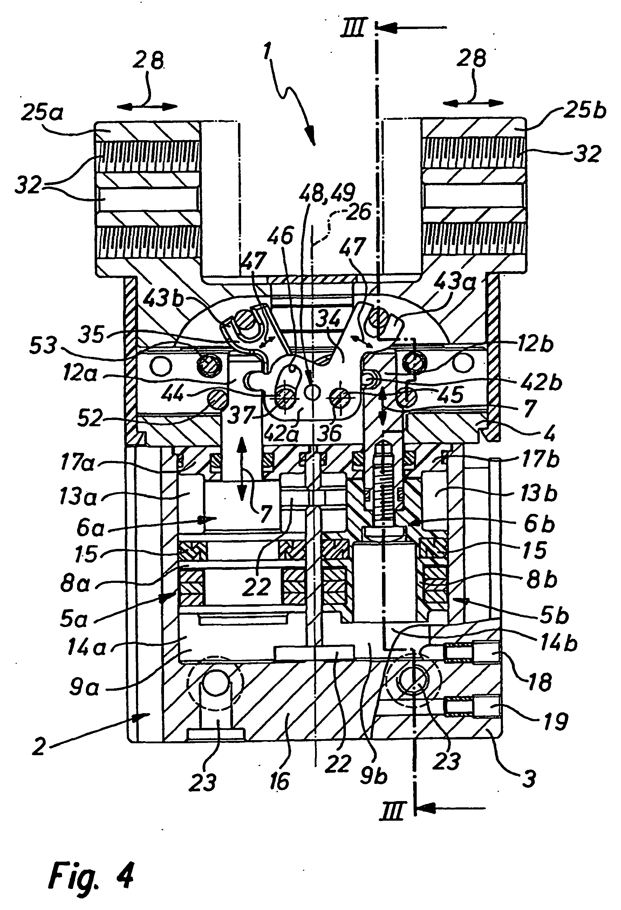

Über zwischengeschaltete Lagerungselemente 27 sind die Greifbackenträger 25a, 25b am Kopfteil 4 relativ zueinander und relativ zum Kopfteil 4 bewegbar gelagert. Die durch die Lagerung möglichen und durch Doppelpfeile angedeuteten Bewegungen seien als Arbeitsbewegungen 28 bezeichnet und verlaufen linear rechtwinkelig zu den Antriebsbewegungen 7. Im Rahmen der Arbeitsbewegungen 28 können die Greifbackenträger 25a, 25b zwischen einer weiter voneinander entfernten, in der Zeichnung in durchgezogenen Linien dargestellten Offenstellung und einer einander angenäherten, in Fig. 4 strichpunktiert angedeuteten Schließstellung bewegt werden.

Jeder Greifbackenträger 25a, 25b ist mit Befestigungsmitteln 32, beispielsweise in Gestalt von Gewindebohrungen, ausgestattet, die die lösbare Befestigung nicht näher dargestellter Greifbacken ermöglichen, welche anwendungsspezifisch ausgebildet sind.

Bei einem als Außengreifer ausgebildeten Parallelgreifer kann ein handzuhabender Gegenstand durch in Richtung der Schließstellung erfolgende Verlagerung der Greifbackenträger 25a, 25b und der mit diesen verbundenen Greifbacken von außen her erfasst werden. Denkbar ist aber auch eine Ausführungsform als sogenannter Innengreifer, bei dem die Greifbacken in einen zu haltenden Gegenstand eingeführt und dann in Richtung der Offenstellung auseinanderbewegt werden.

Die Verschiebelagerung der Greifbackenträger 25a, 25b erfolgt zweckmäßigerweise im Rahmen von Gleitlagerungen. Konkret ist dies beim Ausführungsbeispiel dadurch gelöst, dass das Kopfteil 4 an seiner vom Antriebsteil 3 entgegengesetzten Seite mit einer Schlitzanordnung 33 versehen ist, in die die Greifbackenträger 25a, 25b eintauchen, wobei zwischen jeder Schlitzflanke und der zugewandten Seite eines jeweiligen Greifbackenträgers 25a, 25b ein vorzugsweise stiftförmiges Lagerungselement 27 platziert ist, das in Nuten sowohl der Schlitzflanken als auch der Seitenflächen der Greifbackenträger 25a, 25b eintaucht. Die Ausrichtung der Lagerungselemente 27 entspricht der Richtung der gewünschten Arbeitsbewegungen 28. Zweckmäßigerweise sind insgesamt nur zwei Lagerungselemente 27 vorhanden, die zu beiden Seiten der Greifbackenträger 25a, 25b liegen und jeweils zur Verschiebelagerung beider Greifbackenträger 25a, 25b herangezogen werden.

Die Arbeitsbewegungen 28 werden von den Antriebsbewegungen 7 der Antriebseinheiten 6a, 6b abgeleitet. Hierzu ist zwischen den erwähnten Komponenten eine mechanische zwangsweise Bewegungskopplung vorgesehen. Diese besteht in einer paarweisen Kopplung jeweils einer Antriebseinheit 6a bzw. 6b mit jeweils einem Greifbackenträger 25b bzw. 25a über einen zwischengeschalteten Schwenkhebel 34, 35.

Die beiden als zweiarmige Hebel ausgeführten Schwenkhebel 34, 35 befinden sich im Innern des Kopfteils 4, an dem sie verschwenkbar gelagert sind. Sie sitzen innerhalb der Schlitzanordnung 33, die das Kopfteil 4 im zentralen Bereich in Richtung der Längsachse 26 vollständig durchsetzt, so dass sie dort zum Antriebsteil 3 hin offen ist. Die Schwenkhebel 34, 35 befinden sich in diesem zentralen Bereich, wobei sie zwischen den beiden Antriebsstangen 12a, 12b der Antriebseinheiten 6a, 6b platziert sind, die in die Schlitzanordnung 33 des Kopfteils 4 hineinragen.

Mit Bezug zur Richtung der Antriebsbewegungen 7 liegen die Schwenkhebel 34, 35 auf gleicher axialer Höhe seitlich nebeneinander. Ihre Schwenkachsen 36, 37 liegen ebenfalls auf gleicher Höhe und mit gleichem Abstand auf entgegengesetzten Seiten der Längsachse 26, wobei sie so orientiert sind, dass die Schwenkebenen 38, 39 der Schwenkhebel 34, 35 parallel zueinander verlaufen. Des Weiteren ist die Anordnung so getroffen, dass sowohl die Antriebsbewegungen 7 als auch die Arbeitsbewegungen 28 in den Schwenkebenen 38, 39 liegen oder parallel zu diesen verlaufen.

Jeder Schwenkhebel 34, 35 greift mit seinem ersten Schwenkarm 42a, 42b an der Antriebsstange 12a, 12b der zugeordneten Antriebseinheit 6a, 6b an und mit seinem zweiten Schwenkarm 43a, 43b am zugehörigen Greifbackenträger 25a, 25b.

Die Art der Bewegungskopplung ist so gewählt, dass sich eine Überkreuz-Konfiguration der gekoppelten Paare von Antriebseinheiten und Greifbackenträgern ergibt. Jeder Antriebseinheit 6a, 6b ist in Richtung der Antriebsbewegung ein Greifbackenträger 25a, 25b vorgelagert, wobei jede Antriebseinheit 6a, 6b durch den ihr zugeordneten Schwenkhebel 34, 35 mit dem der jeweils anderen Antriebseinheit 6b, 6a vorgelagerten Greifbackenträger bewegungsgekoppelt ist.

In Verbindung mit einer besonderen winkelmäßigen Ausgestaltung der Schwenkhebel 34, 35 können auf diese Weise besonders kompakte Längenabmessungen des Parallelgreifers 1 erzielt werden. So sind bei den beiden Schwenkhebeln 34, 35 die Schwenkarme 42a, 43a bzw. 42b, 43b stumpfwinkelig zueinander angeordnet, was genauer gesagt bedeutet, dass die gedachten Verbindungslinien zwischen einer jeweiligen Schwenkachse 36, 37 und den Angriffspunkten der Schwenkarme an den Antriebseinheiten und den Greifbackenträgern einen stumpfen Winkel einschließen.

Die an den Antriebseinheiten 6a, 6b angreifenden ersten Schwenkarme 42a, 42b der Schwenkhebel 34, 35 werden von den Antriebseinheiten 6a, 6b flankiert, und lediglich die zweiten Schwenkarme 43a, 43b ragen aus dem Zwischenbereich zwischen den Antriebseinheiten 6a, 6b hinaus in einen diesen axial vorgelagerten Bereich.

Die Anordnung ist des Weiteren so getroffen, dass die Schwenkachsen 36, 37 der Schwenkhebel 34, 35 auf der entgegengesetzten Seite der Längsachse 26 liegen wie diejenige Antriebseinheit 6a, 6b, an der der betreffende Schwenkhebel 34, 35 angreift.

Insgesamt stellt sich so der Effekt ein, dass bei gleichzeitig stattfindenden gleichsinnigen Antriebsbewegungen 7 der Antriebseinheiten 6a, 6b von den Schwenkhebeln 34, 35 gegensinnige Schwenkbewegungen 47 ausgeführt werden, die zur Folge haben, dass die Greifbackenträger 25a, 25b gleichzeitig entweder einander angenähert oder voneinander entfernt werden.

Die Bewegungskopplung zwischen den Schwenkhebeln 34, 35 und einer jeweiligen Antriebseinheit 6a, 6b erfolgt beim Ausführungsbeispiel dadurch, dass der Schwenkhebel 34, 35 einen Vorsprung aufweist, der in eine Nut am Umfang der Antriebsstange 12a, 12b eingreift. Zur Bewegungskopplung mit den Greifbackenträgern 25a, 25b sind an letzteren Stifte vorgesehen, die von gabelartigen Endabschnitten der Schwenkhebel 34, 35 umgriffen werden.

Die Schwenkachsen 36, 37 sind beim Ausführungsbeispiel durch zylindrische Lagerbolzen 44 definiert, die den Schwenkhebel 34, 35 tragen und im Kopfteil 4 fixiert sind. Damit durch einen jeweiligen Lagerbolzen 44, 45 die Schwenkbeweglichkeit des jeweils anderen Schwenkhebels 34, 35 nicht beeinträchtigt wird, ist letzterer mit einem bogenförmigen Langloch 46 ausgestattet, durch das der Lagerbolzen des jeweils anderen Schwenkhebels hindurchgreifen kann. Das Zentrum der Krümmung des Langloches 46 liegt in der Schwenkachse 36, 37 des das Langloch 46 aufweisenden Schwenkhebels 34, 35.

Der Parallelgreifer 1 ist für eine Betriebsweise ausgelegt, bei der die Antriebseinheiten 6a, 6b durch entsprechende Fluidbeaufschlagung jeweils gleichzeitig in der gleichen Bewegungsrichtung tandemartig betätigt werden. Dabei ist angestrebt, dass sich die Greifbackenträger 25a, 25b symmetrisch bezüglich der Längsachse 26 bewegen und stets im gleichen Abstand zu dieser angeordnet sind. Um dies zu erreichen, sind die Schwenkhebel 34, 35 durch gegenseitige mechanische Kopplung in ihren durch Doppelpfeile 47 angedeuteten Schwenkbewegungen synchronisiert. Wäre diese Synchronisation nicht vorhanden, könnte auf Grund der fehlenden direkten mechanischen Kopplung der beiden Antriebseinheiten 6a, 6b der Effekt auftreten, dass z.B. bei unterschiedlicher Reibung, die Antriebseinheiten 6a, 6b unterschiedlich schnell bzw. unterschiedlich weit verlagert werden und dadurch kein symmetrisches Bewegungsverhalten der Greifbackenträger 25a, 25b gewährleistet werden könnte.

Durch die Synchronisationsmaßnahmen erfolgt eine Zwangskopplung zwischen den Schwenkhebeln 34, 35, wobei die Bewegung des einen Schwenkhebels 34, 35 eine unterstützende Mitnahme des anderen Schwenkhebels 35, 34 zur Folge hat, und umgekehrt. Die die Synchronisation bewirkende mechanische Kopplung wird beim Ausführungsbeispiel dadurch erreicht, dass am einen Schwenkhebel 34 ein zur Schwenkachse 36 beabstandeter Mitnehmer 48 vorgesehen ist, der mit einem am anderen Schwenkhebel 35 vorgesehenen Mitnehmer-Gegenstück 49 in Mitnahmeeingriff steht.

Beim Ausführungsbeispiel besteht der Mitnehmer 48 aus einem zur Schwenkachse des betreffenden Schwenkhebels 36 parallelen Stift, der in Richtung zum daneben angeordneten zweiten Schwenkhebel 35 wegragt und in ein Loch des benachbarten Schwenkhebels 34 eintaucht, das das Mitnehmer-Gegenstück 49 bildet. Dabei ist zweckmäßigerweise der Mitnahmeeingriff so ausgeführt, dass Mitnehmer 48 und Mitnehmer-Gegenstück 49 quer zur Schwenkrichtung der beiden Schwenkhebel 34, 35 relativ zueinander beweglich sind und lediglich in der Schwenkrichtung ein die Mitnahme bewirkender Berührkontakt vorliegt. Auf diese Weise wird verhindert, dass die miteinander in Eingriff stehenden Teile ein Verklemmen verursachen. Am einfachsten kann die Anordnung dadurch realisiert werden, dass man den Mitnehmer 48 zumindest im Eingriffsbereich mit zylindrischem Querschnitt ausführt und das als Mitnehmer-Gegenstück 49 fungierende Loch länglich und/oder langlochartig ausbildet.

Mitnehmer 48 und Mitnehmer-Gegenstück 49 befinden sich zweckmäßigerweise im Bereich zwischen den beiden Schwenkachsen 36, 37, wobei sie insbesondere mittig angeordnet sind und zweckmäßigerweise auf der Längsachse 26 des Parallelgreifers 1 liegen.

Damit die Antriebseinheiten 6a, 6b stets im Eingriff mit den Schwenkhebeln 34, 35 bleiben, sind sie verdrehgesichert. Die hierzu getroffenen Maßnahmen bestehen beim Ausführungsbeispiel darin, dass im Kopfteil 4 für jede Antriebseinheit 6a, 6b ein parallel zu den Schwenkachsen 36, 37 verlaufender Führungsbolzen 52 verankert ist, der an einem abgeflachten Umfangsabschnitt der Antriebsstange 12a, 12b anliegt.

Das Kopfteil 4 ist des Weiteren zweckmäßigerweise mit einer oder mehreren Spannschrauben 53 ausgestattet, die in den die Schlitzanordnung 33 begrenzenden Gehäuseabschnitten des Kopfteils 4 verankert sind und durch die, entsprechend dem gewählten Vorspannungsgrad, die Schlitzbreite der Schlitzanordnung 33 variiert werden kann. Es besteht auf diese Weise die Möglichkeit, das Führungsspiel zwischen den Greifbackenträgern 25a, 25b und dem Greifergehäuse 2 nahezu vollständig zu eliminieren.

Auf dem Kopfteil 4 sitzt zweckmäßigerweise noch eine haubenartige Abdeckung 54, die über Aussparungen für den Durchgriff der Greifbackenträger 25a, 25b verfügt und die Schlitzanordnung 33 mitsamt der Schwenkhebelanordnung 34, 35 zur Umgebung hin abschirmt.

Zusammenfassend lässt sich festhalten, dass beim Ausführungsbeispiel ein Greifergehäuse 2 mit zwei parallel zueinander angeordneten Kolbenräumen 9a, 9b vorgesehen ist, wobei jeder Kolben 8a, 8b über den ihm zugeordneten Schwenkhebel 34, 35 direkt auf einen der Greifbackenträger 25a, 25b einwirkt. Man kann auf diese Weise hohe Greifkräfte bei kompaktem Bauvolumen erzielen. Die Schwenkhebel 34, 35 sind derart miteinander verbunden, dass die Greifbackenträger 25a, 25b stets gleichzeitig gegensinnig verlagert werden.

Das Greifergehäuse 2 besteht zweckmäßigerweise aus Metall und insbesondere aus Aluminiummaterial.

Anstelle einer Ausführung mit doppeltwirkenden Betätigungseinrichtungen 5a, 5b wäre es auch denkbar, eine Bauform zu wählen, bei der die Bewegung der Antriebseinheiten 6a, 6b in einer Richtung nicht durch Fluidkraft, sondern durch Federkraft hervorgerufen wird.

Die Hubbegrenzung der Greifbackenträger findet zweckmäßigerweise über einen Festanschlag in den Endlagen der Antriebseinheiten 6a, 6b statt.

## Patentansprüche

1. Fluidbetätigter Parallelgreifer, mit zwei nebeneinander angeordneten Greifbackenträgern (25a, 25b), die unter gegenseitiger Annäherung oder Entfernung unter Ausübung von Arbeitsbewegungen (28) zwischen einer Offenstellung und einer Schließstellung relativ zueinander linear beweglich sind, und mit zwei nebeneinander angeordneten Antriebseinheiten (6a, 6b), die durch Fluidbeaufschlagung zu zueinander parallelen und zu den Arbeitsbewegungen (28) rechtwinkeligen Antriebsbewegungen (7) veranlasst werden können, wobei die Antriebseinheiten (6a, 6b) und die Greifbackenträger (25a, 25b) zum Hervorrufen der Arbeitsbewegungen (28) durch jeweils einen zwischengeschalteten Schwenkhebel (34, 35) paarweise bewegungsgekoppelt sind, **dadurch gekennzeichnet, dass** die Schwenkhebel (34, 35) in ihren Schwenkbewegungen (47) durch gegenseitige mechanische Kopplung synchronisiert sind.

2. Parallelgreifer nach Anspruch 1, **dadurch gekennzeichnet, dass** die Schwenkhebel (34, 35) zumindest teilweise zwischen den beiden Antriebseinheiten (6a, 6b) platziert sind.

3. Parallelgreifer nach Anspruch 1 oder 2, **dadurch gekennzeichnet, dass** die Schwenkhebel (34, 35) mit Bezug zur Richtung der Antriebsbewegungen (7) auf gleicher Höhe und mit zueinander parallelen Schwenkebenen (38, 39) seitlich nebeneinander angeordnet sind.

4. Parallelgreifer nach einem der Ansprüche 1 bis 3, **dadurch gekennzeichnet, dass** jeder Antriebseinheit (6a, 6b) in Richtung der Antriebsbewegung (7) ein Greifbackenträger (25a, 25b) vorgelagert ist, wobei jede Antriebseinheit (6a, 6b) durch den ihr zugeordneten Schwenkhebel (34, 35) mit dem der jeweils anderen Antriebseinheit (6b, 6a) vorgelagerten Greifbackenträger bewegungsgekoppelt ist.

5. Parallelgreifer nach einem der Ansprüche 1 bis 4, **dadurch gekennzeichnet, dass** die beiden Schwenkarme (42a, 43a; 42b, 43b) eines jeweiligen Schwenkhebels (34, 35) einen stumpfen Winkel einschließen.

6. Parallelgreifer nach einem der Ansprüche 1 bis 5, **dadurch gekennzeichnet, dass** jeder Schwenkhebel (34, 35) über einen eigenen Lagerbolzen (44, 45) schwenkgelagert ist, wobei der zur Lagerung des jeweils einen Schwenkhebels dienende Lagerbolzen ein bogenförmiges Langloch (46) des jeweils anderen Schwenkhebels durchsetzt.

7. Parallelgreifer nach einem der Ansprüche 1 bis 6, **dadurch gekennzeichnet, dass** zur mechanischen Kopplung der Schwenkhebel (34, 35) an wenigstens einem Schwenkhebel (34) ein zur Schwenkachse (36) beabstandeter Mitnehmer (48) vorgesehen ist, der mit einem am anderen Schwenkhebel (35) vorgesehenen Mitnehmer-Gegenstück (49) in Mitnahmeeingriff steht.

8. Parallelgreifer nach Anspruch 7, **dadurch gekennzeichnet, dass** der Mitnahmeeingriff so ausgeführt ist, dass Mitnehmer (48) und Mitnehmer-Gegenstück (49) quer zur Schwenkrichtung (47) der beiden gegensinnig beweglichen Schwenkhebel (34, 35) relativ zueinander beweglich sind.

9. Parallelgreifer nach Anspruch 7 oder 8, **dadurch gekennzeichnet, dass** der Mitnehmer (48) als zur Schwenkachse (36) des zugeordneten Schwenkhebels (34) paralleler Stift und das Mitnehmer-Gegenstück (49) als am anderen Schwenkhebel (35) vorgesehenes Loch ausgebildet ist.

10. Parallelgreifer nach einem der Ansprüche 1 bis 9, **dadurch gekennzeichnet, dass** die Bewegungskopplung durch die Schwenkhebel (34, 35) derart ausgeführt ist, dass die Arbeitsbewegungen (28) der Greifbackenträger (25a, 25b) durch gleichzeitige, gleichsinnige Antriebsbewegungen (7) der Antriebseinheiten (6a, 6b) hervorrufbar sind.

11. Parallelgreifer nach einem der Ansprüche 1 bis 10, **dadurch gekennzeichnet, dass** das Greifergehäuse (2) ein zur Verschiebelagerung der beiden Antriebseinheiten (6a, 6b) dienendes Antriebsteil (3) und ein bezüglich des Antriebsteils (3) separat ausgebildetes, zur Lagerung der Greifbackenträger (25a, 25b) dienendes und stirnseitig an das Antriebsteil (3) angesetztes Kopfteil (4) aufweist.

12. Parallelgreifer nach Anspruch 11, **dadurch gekennzeichnet, dass** die Schwenkhebel (34, 35) im Kopfteil (4) angeordnet sind.

13. Parallelgreifer nach Anspruch 11 oder 12, **dadurch gekennzeichnet, dass** jede Antriebseinheit (6a, 6b) einen im Antriebsteil (3) angeordneten fluidbeaufschlagbaren Kolben (8a, 8b) und eine aus dem Antriebsteil (3) heraus- in das Kopfteil (4) hineinragende und dort am zugeordneten Schwenkhebel (34, 35) angreifende Antriebsstange (12a, 12b) aufweist.

14. Parallelgreifer nach einem der Ansprüche 1 bis 13, **dadurch gekennzeichnet, dass** die Schwenkhebel (34, 35) bei gleichsinniger Bewegung der Antriebseinheiten (6a, 6b) gegensinnige Schwenkbewegungen (47) ausführen.

15. Parallelgreifer nach einem der Ansprüche 1 bis 14, **dadurch gekennzeichnet, dass** die Antriebseinheiten (6a, 6b) im Greifergehäuse (2) jeweils einen oder zwei zur Fluidbeaufschlagung vorgesehene Beaufschlagungsräume (13a, 13b; 14a, 14b) abteilen, wobei die für gleichgerichtete Bewegungen zuständigen Paare von Beaufschlagungsräumen (13a, 13b; 14a, 14b) im Greifergehäuse (2) fluidisch verbunden sind und mit einem gemeinsamen Fluidanschluss (18, 19) außen am Greifergehäuse (2) kommunizieren.

16. Parallelgreifer nach einem der Ansprüche 1 bis 15, **dadurch gekennzeichnet, dass** die Greifbackenträger (25a, 25b) zur lösbaren Befestigung von Greifbacken ausgebildet sind.

17. Parallelgreifer nach einem der Ansprüche 1 bis 16, **dadurch gekennzeichnet, dass** die Längsachsen der beiden Antriebseinheiten (6a, 6b) in einer gemeinsamen Ebene liegen, die parallel zu den Schwenkebenen (38, 39) der Schwenkhebel (34, 35) verläuft.

## Claims

1. Fluid-operated parallel gripper with two gripping jaw carriers (25a, 25b) arranged side by side and capable of linear movement relative to one another between an open position and a closed position while approaching one another or moving away from one another to perform an operating movement (28), and with two drive units (6a, 6b) arranged side by side, which can be induced by the admission of fluid to perform drive movements (7) parallel to one another and at right angles to the operating movements (28), wherein the drive units (6a, 6b) and the gripping jaw carriers (25a, 25b) are coupled for movement in pairs by interposed pivoted levers (34, 35) to cause the operating movements (28), **characterised in that** the pivoting movements (47) of the pivoted levers (34, 35) are synchronised by mutual mechanical coupling.

2. Parallel gripper according to claim 1, **characterised in that** the pivoted levers (34, 35) are at least partially placed between the two drive units (6a, 6b).

3. Parallel gripper according to claim 1 or 2, **characterised in that** the pivoted levers (34, 35) are arranged at the same level with reference to the drive movements (7) and side by side with parallel pivoting planes (38, 39).

4. Parallel gripper according to any of claims 1 to 3, **characterised in that** a gripping jaw carrier (25a, 25b) is located in front of each drive unit (6a, 6b) in the direction of the drive movement (7), each drive unit (6a, 6b) being coupled for movement with the gripping jaw carrier located in front of the other drive unit (6b, 6a) by the associated pivoted lever (34, 35).

5. Parallel gripper according to any of claims 1 to 4, **characterised in that** the two swivelling arms (42a, 43a; 42b, 43b) of each pivoted lever (34, 35) enclose an obtuse angle.

6. Parallel gripper according to any of claims 1 to 5, **characterised in that** each pivoted lever (34, 35) is pivoted about its own bearing bolt (44, 45), the bearing bolt for one pivoted lever passing through a curved slot (46) of the other pivoted lever.

7. Parallel gripper according to any of claims 1 to 6, **characterised in that** a driver (48) located at a distance from the pivot axis (36) and in driving engagement with a driver counterpart (49) provided on the other pivoted lever (35) is fitted to at least one pivoted lever (34) for mechanical coupling.

8. Parallel gripper according to claim 7, **characterised in that** the driving engagement is so designed that the driver (48) and the driver counterpart (49) are movable relative to one another at right angles to the pivoting direction (47) of the two pivoted levers (34, 35) movable in opposite directions.

9. Parallel gripper according to claim 7 or 8, **characterised in that** the driver (48) is designed as a pin parallel to the pivoting axis (36) of the associated pivoted lever (34), while the driver counterpart (49) is designed as a hole provided in the other pivoted lever (35).

10. Parallel gripper according to any of claims 1 to 9, **characterised in that** the coupling by means of the pivoted levers (34, 35) is so designed that the operating movements (28) of the gripping jaw carriers (25a, 25b) can be induced by the simultaneous equidirectional drive movements (7) of the drive units (6a, 6b).

11. Parallel gripper according to any of claims 1 to 10, **characterised in that** the gripper housing (2) comprises a drive part (3) for the movable support of the two drive units (6a, 6b) and a head part (4) separate from the drive part (3), which is provided for the support of the gripping jaw carriers (25a, 25b) and attached to the end face of the drive part (3).

12. Parallel gripper according to claim 11, **characterised in that** the pivoted levers (34, 35) are located in the head part (4).

13. Parallel gripper according to claim 11 or 12, **characterised in that** each drive unit (6a, 6b) comprises a piston (8a, 8b) located in the drive part (3) and acted on by a fluid and a drive rod (12a, 12b) projecting from the drive part (3) into the head part (4) and there acting on the associated pivoted lever (34, 35).

14. Parallel gripper according to any of claims 1 to 13, **characterised in that** the pivoted levers (34, 35) perform pivoting movements in opposite directions at any equidirectional movement of the drive units (6a, 6b).

15. Parallel gripper according to any of claims 1 to 14, **characterised in that** each of the drive units (6a, 6b) partitions one or two pressurisation chambers (13a, 13b; 14a, 14b) for the admission of fluid in the gripper housing (2), the pairs of pressurisation chambers (13a, 13b; 14a, 14b) responsible for equidirectional movements being fluid-connected within the gripper housing (2) and communicating with a common fluid port (18, 19) on the outside of the gripper housing (2).

16. Parallel gripper according to any of claims 1 to 15, **characterised in that** the gripping jaw carriers (25a, 24b) are designed for the releasable mounting of gripping jaws.

17. Parallel gripper according to any of claims 1 to 16, **characterised in that** the longitudinal axes of the two drive units (6a, 6b) lie in a common plane extending parallel to the pivoting planes (38, 39) of the pivoted levers (34, 35).

## Revendications

1. Pince à mâchoires parallèles actionnée par fluide, comprenant deux supports de mâchoires de préhension (25a, 25b) disposés l'un à côté de l'autre, qui sont mobiles dans le sens linéaire l'un par rapport à l'autre en se rapprochant ou en s'éloignant l'un de l'autre et en décrivant des mouvements de travail (28) entre une position ouverte et une position fermée, et deux unités d'entraînement (6a, 6b) disposées l'une à côté de l'autre, qui peuvent être amenées par la sollicitation du fluide à effectuer des mouvements d'entraînement (7) parallèles entre eux et à angle droit par rapport aux mouvements de travail (28), les unités d'entraînement (6a, 6b) et les supports de mâchoires de préhension (25a, 25b) étant couplés par paires au niveau du mouvement par respectivement un levier pivotant (34, 35) intercalé pour entraîner les mouvements de travail (28), **caractérisée en ce que** les leviers pivotants (34, 35) sont synchronisés dans leurs mouvements de pivotement (47) par un couplage mécanique réciproque.

2. Pince à mâchoires parallèles selon la revendication 1, **caractérisée en ce que** les leviers pivotants (34, 35) sont placés au moins partiellement entre les deux unités d'entraînement (6a, 6b).

3. Pince à mâchoires parallèles selon la revendication 1 ou 2, **caractérisée en ce que** les leviers pivotants (34, 35) sont disposés à la même hauteur par rapport à la direction des mouvements d'entraînement (7) et l'un à côté de l'autre par le côté avec des plans de pivotement (38, 39) parallèles entre eux.

4. Pince à mâchoires parallèles selon l'une des revendications 1 à 3, **caractérisée en ce que** chaque unité d'entraînement (6a, 6b) est précédée dans la direction du mouvement d'entraînement (7) d'un support de mâchoire de préhension (25a, 25b), chaque unité d'entraînement (6a, 6b) étant couplée au niveau du mouvement par le levier pivotant (34, 35) qui lui est associé avec le support de mâchoire de préhension placé en amont de l'autre unité d'entraînement (6a, 6b) respective.

5. Pince à mâchoires parallèles selon l'une des revendications 1 à 4, **caractérisée en ce que** les deux bras pivotants (42a, 43a ; 42b, 43b) de chaque levier pivotant (34, 35) forment un angle aigu.

6. Pince à mâchoires parallèles selon l'une des revendications 1 à 5, **caractérisée en ce que** chaque levier pivotant (34, 35) est monté de façon pivotante au moyen d'un axe de palier (44, 45) propre, l'axe de palier servant à la fixation de respectivement un levier pivotant traversant un trou oblong (46) en forme d'arc de l'autre levier pivotant respectif.

7. Pince à mâchoires parallèles selon l'une des revendications 1 à 6, **caractérisée en ce qu'**il est prévu, pour le couplage mécanique des leviers pivotants (34, 35) sur au moins un levier pivotant (34), un entraîneur (48) espacé de l'axe de pivotement (36) qui est en liaison d'entraînement avec une pièce complémentaire d'entraîneur (49) prévue sur l'autre levier pivotant (35).

8. Pince à mâchoires parallèles selon la revendication 7, **caractérisée en ce que** la liaison d'entraînement est réalisée de telle sorte que l'entraîneur (48) et la pièce complémentaire d'entraîneur (49) sont mobiles l'un par rapport à l'autre transversalement à la direction du pivotement (47) des deux leviers pivotants (34, 35) mobiles dans le sens contraire.

9. Pince à mâchoires parallèles selon la revendication 7 ou 8, **caractérisée en ce que** l'entraîneur (48) est conçu comme une goupille parallèle à l'axe de pivotement (36) du levier pivotant (34) associé et la pièce complémentaire d'entraîneur (49) comme un trou prévu sur l'autre levier pivotant (35).

10. Pince à mâchoires parallèles selon l'une des revendications 1 à 9, **caractérisée en ce que** l'accouplement en mouvement est réalisé par les leviers pivotants (34, 35), de telle sorte que les mouvements de travail (28) des supports de mâchoires de préhension (25a, 25b) peuvent être provoqués par des mouvements d'entraînement (7) simultanés et dans le même sens des unités d'entraînement (6a, 6b).

11. Pince à mâchoires parallèles selon l'une des revendications 1 à 10, **caractérisée en ce que** le boîtier de pince (2) présente une partie d'entraînement (3) servant au montage coulissant des deux unités d'entraînement (6a, 6b) et une partie supérieure (4) conçue séparément par rapport à la partie d'entraînement (3), servant à la fixation des supports de mâchoires de pince (25a, 25b) et rapportée côté avant sur la partie d'entraînement (3).

12. Pince à mâchoires parallèles selon la revendication 11, **caractérisée en ce que** les leviers pivotants (34, 35) sont disposés dans la partie supérieure (4).

13. Pince à mâchoires parallèles selon la revendication 11 ou 12, **caractérisée en ce que** chaque unité d'entraînement (6a, 6b) présente un piston (8a, 8b) pouvant être sollicité par un fluide et disposé dans la partie d'entraînement (3) et une tige d'entraînement (12a, 12b) dépassant de la partie d'entraînement (3), s'engageant dans la partie supérieure (4) et agissant à cet endroit sur le levier pivotant (34, 35) associé.

14. Pince à mâchoires parallèles selon l'une des revendications 1 à 13, **caractérisée en ce que** les leviers pivotants (34, 35) exécutent des mouvements de pivotement (47) de sens opposé pour un mouvement dans le même sens des unités d'entraînement (6a, 6b).

15. Pince à mâchoires parallèles selon l'une des revendications 1 à 14, **caractérisée en ce que** les unités d'entraînement (6a, 6b) délimitent dans le boîtier de pince (2) respectivement une ou deux chambres d'alimentation (13a, 13b ; 14a, 14b) prévues pour l'alimentation en fluide, les paires de chambres d'alimentation (13a, 13b ; 14a, 14b) responsables des mouvements orientés dans le même sens étant reliées de façon fluidique à l'intérieur du boîtier de pince (2) et communiquant avec un raccordement de fluide (18, 19) commun situé à l'extérieur sur le boîtier de pince (2).

16. Pince à mâchoires parallèles selon l'une des revendications 1 à 15, **caractérisée en ce que** les supports de mâchoires de pince (25a, 25b) sont réalisés pour la fixation amovible de mâchoires de pince.

17. Pince à mâchoires parallèles selon l'une des revendications 1 à 16, **caractérisée en ce que** les axes longitudinaux des deux unités d'entraînement (6a, 6b) sont disposés dans un plan commun qui est parallèle aux plans de pivotement (38, 39) des leviers pivotants (34, 35).
